# EUROPEAN PATENT APPLICATION

(11) **EP 0 867 364 A2**
(43) Date of publication of application: **30.09.1998**
(21) Application number: 97203610.7
(22) Date of filing: 19.11.1997
(51) Int. Cl.: B64C 27/82, B64C 13/16, G05D 1/08

(54) **Compensation apparatus for main rotor torque**

(30) Priority: 26.03.1997 JP 73159/97
(71) Applicant: Advanced Technology Institute of Commuter-Helicopter, Ltd., Kakamigahara-shi, Gifu (JP)
(72) Inventor: Yamakawa,Eiichi, c/o Commuter-Helicopter, Ltd., Kakamigahara-shi, gifu (JP); Kondo, Natsuki, c/o Commuter-Helicopter, Ltd., Kakamigahara-shi, gifu (JP)
(74) Representative: Smulders, Theodorus A.H.J., Ir.

(57) **Abstract**

A main rotor torque compensation apparatus (101) is an apparatus for a helicopter having a main rotor (2) and a tail rotor (3). Vertical tails (4, 5) are supported at a variable angle of attack. An actuator (47) adjusts the angle of attack such that an opposite torque of the main rotor torque is compensated together with the tail rotor (3). Since the angle of attack of the vertical tails (4, 5) is variable, the main rotor torque can be compensated by adjusting the torque generated in the vertical tails (4, 5).

## Description

### BACKGROUND OF THE INVENTION

### 1. Field of the Invention

The present invention relates to a compensation apparatus for compensating a main rotor torque by generating an opposite torque of the main rotor torque of a helicopter.

### 2. Description of Related Art

In a helicopter having a main rotor and a tail rotor, rotation of the main rotor causes a helicopter fuselage to react a torque T1 in a direction opposite to a rotational direction of the main rotor. A thrust of the tail rotor is utilized for offsetting the torque T1, and the tail rotor generates a torque T2 in the direction opposite to the torque T1. Further, a vertical tail which is attached to the fuselage with a constant angle of attack generates a torque T3 in the direction identical with that of the torque T2. These torques cancel out each other as: $\text{T1+T2+T3 = 0}$, whereby maintaining the attitude of the fuselage.

In recent years, it has been increasing a demand for helicopters for taking off or landing on a heliport in city areas and, for this end, it is required to reduce noise. One of effective countermeasures against the noise is to decrease the rotational speed of the main rotor.

In the case of changing the rotational speed of the main rotor, the main rotor torque of the helicopter is changed and the torque T1 no more balances with the torques T2 and T3. In this case, a pilot steers a rudder pedal to change a pitch angle of the tail rotor and adjusts the torque T2 thereby maintaining the attitude of the fuselage.

However, when the torque T2 is adjusted by the steering of the rudder pedal, the pilot has to keep a constant amount of input continuously to the rudder pedal, which imposes a great burden on the pilot. In the existent helicopter, the pilot always steers the rudder pedal to compensate the change of the main rotor torque T1 by adjusting the torque T2 in the opposite direction caused by the tail rotor.

### SUMMARY OF THE INVENTION

An object of the present invention is to provide a compensation apparatus for a main rotor torque capable of maintaining the attitude of a fuselage and reducing pilot work load.

The present invention provides a compensation apparatus for a main rotor torque in a helicopter having a main rotor and a tail rotor, comprising:
a vertical tail which is attached to the fuselage at a variable angle of attack; and
angle of attack adjusting means for adjusting the angle of attack of the vertical tail for compensating an opposite torque of the main rotor torque together with the tail rotor.

In accordance with the present invention, since the angle of attack of the vertical tail is variable, the torque generated by the vertical tail can be adjusted. Usually, the torque generated by the tail rotor, as well as in the vertical tail cancel out the opposite torque of the main rotor. When the torque of the main rotor changes, the change of the opposite torque can be compensated by the tail rotor as well as by the change of the angle of attack of the vertical tail. Particularly, since the vertical tail generates a large torque at high airspeed even with a small angle of attack, thereby realizing high ability of the torque compensation at high airspeed. On the other hand, the vertical tail can compensate the main rotor torque in cooperation with the tail rotor having the high compensation ability at low airspeed.

Further, it is preferable in the invention that the compensation apparatus further comprises:
airspeed measuring means for measuring an airspeed;
main rotor torque measuring means for measuring the main rotor torque;
pitch angle adjusting means for adjusting a pitch angle of the tail rotor; and
control means for controlling the angle of attack adjusting means of the vertical tail and the pitch angle adjusting means of the tail rotor based on the measured airspeed and main rotor torque.

In accordance with the invention, since the pitch angle of the tail rotor and the angle of attack of the vertical tail are controlled based on the measured airspeed and main rotor torque, in a case where the balance of the torque is lost by the change of the airspeed or the change of the main rotor torque, the balanced state can be restored automatically. Thus, it is unnecessary for a pilot to adjust the rudder pedal even when the airspeed or the main rotor torque is changed, and the pilot work load can be reduced outstandingly. Further, since both of the pitch angle of the tail rotor and the angle of attack of the vertical tail are variable, the entire torque can be adjusted more reliably at various airspeeds and the fuselage attitude can be maintained more stably.

Further, it is preferable in the invention that the amount of torque compensation by the vertical tail is increased and the amount of torque compensation by the tail rotor is decreased while the airspeed increases.

In accordance with the present invention, the tail rotor is effective for the torque compensation at low airspeed and the vertical tail is effective for the torque compensation at high airspeed. On the other hand, the main rotor torque decreases along with increase of the airspeed in a region of low airspeed, while the main rotor torque increases along with increase of the airspeed in a region of high airspeed. Therefore, when the torque compensation is performed by using both of the amount of torque compensation increasing relative to the airspeed (vertical tail) and the amount of torque compensation decreasing relative to the airspeed (tail rotor), since the entire amount of compensation shows the same airspeed dependence as the main rotor torque, more reliable torque compensation is enabled. Further, since the torque can be compensated within a wider region of airspeed, the effectiveness of the torque compensation is enhanced.

Further, it is preferable in the invention that the compensation apparatus further comprises rotational speed measuring means for measuring the rotational speed of the main rotor, wherein the control means adjust the amount of torque compensation based on the measured rotational speed.

In accordance with the invention, since the amount of torque compensation can be adjusted based on both the main rotor torque and the measured rotational speed when the rotational speed of the main rotor changes, the accuracy of compensation is improved outstandingly and the main rotor torque changed by the change of the rotational speed can be compensated more reliably.

Further, it is preferable in the invention that in a case where the tail rotor is failed during flying at a constant airspeed, the amount of torque compensation by the vertical tail is increased as much as the amount of torque compensation by the tail rotor.

In accordance with the invention, the helicopter can continue to fly with some airspeed when the tail rotor is failed, since the vertical tail can conduct the torque compensation also including that by the tail rotor.

### BRIEF DESCRIPTION OF THE DRAWINGS

Other and further objects, features, and advantages of the invention will be more explicit from the following detailed description taken with reference to the drawings wherein:
Fig. 1 is a perspective view illustrating an embodiment of the present invention;
Fig. 2 is a view illustrating a power transmission system of a helicopter 1 shown in Fig. 1;
Fig. 3 is a view illustrating a torque compensation apparatus 101 of the helicopter 1 shown in Fig. 1;
Fig. 4 is a view illustrating a torque compensation apparatus 102;
Fig. 5 is a view illustrating a torque compensation apparatus 103;
Fig. 6 is a graph illustrating airspeed dependences of torques T1 to T3; and
Fig. 7 is a graph illustrating airspeed dependences of yaw angles of the helicopter.

### DETAILED DESCRIPTION OF THE PREFERRED EMBODIMENTS

Now referring to the drawings, preferred embodiments of the invention are described below.

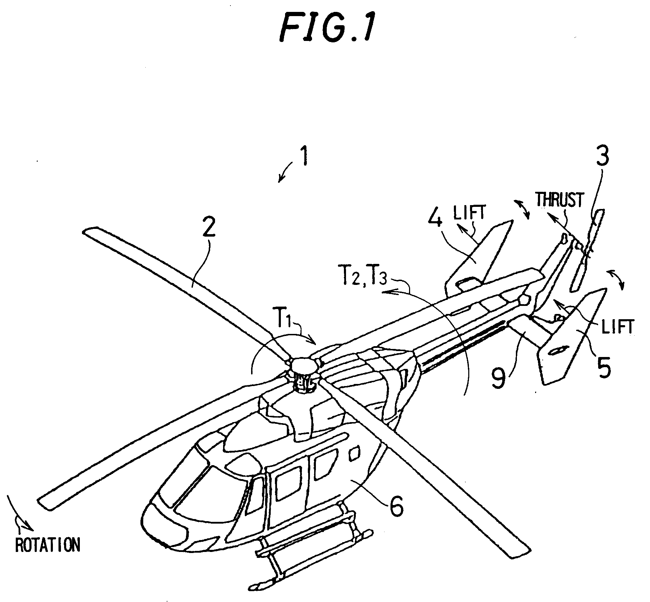

Fig. 1 is a view illustrating an embodiment of the invention. When a main rotor 2 rotates, a fuselage 6 of a helicopter 1 reacts a torque T1 in the direction opposite to the rotational direction of the main rotor 2. On the other hand, a tail rotor 3 generates a thrust by rotation at a variable pitch angle, to generate a torque T2 in the direction opposite to that of the torque T1. Further, vertical tails 4 and 5 are supported at a variable angle of attack and produce lift forces when the helicopter 1 flies forward, to generate a torque T3 in the same direction as the torque T2. The torques T1 to T3 offset each other as: $\text{T1+T2+T3 = 0}$, to thereby maintain the attitude of the fuselage 6.

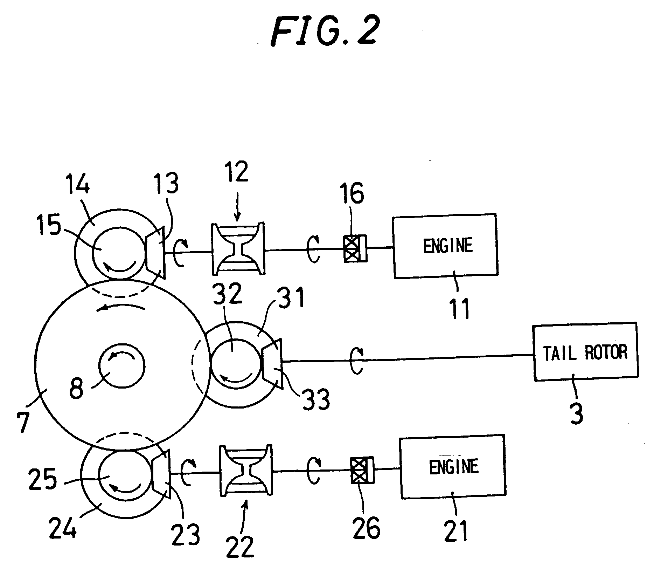

Fig. 2 is an explanatory view of a driving system for the helicopter 1 of Fig. 1. A pair of power shafts of engines 11 and 21 are connected by way of free wheel clutches 16 and 26 capable of torque transmission in one direction to traction speed changing mechanisms 12 and 22 such as a half toroidal type CVT (continuously variable transmission) or full toroidal type CVT respectively, to conduct deceleration or acceleration at a desired rotational speed changing ratio. The power shafts of the traction speed changing mechanisms 12 and 22 are connected to bevel gears 13 and 23 respectively and further engaging the bevel gears 14 and 24 to change the direction of the rotational axis. A gear 15 which rotates integrally with the bevel gear 14 and a gear 25 which rotates integrally with the bevel gear 24 engage a collector gear 7 to rotationally drive a main rotor shaft 8. The collector gear 7 further engages a gear 32 which rotates integrally with a bevel gear 31 to rotationally drive the tail rotor 3.

By adjusting the rotational speed changing ratio of traction speed changing mechanisms 12 and 22 while keeping rotational speed of the engines 11 and 21 constant, rotational speed of the main rotor 2 connected to the main rotor shaft 8 can be adjusted.

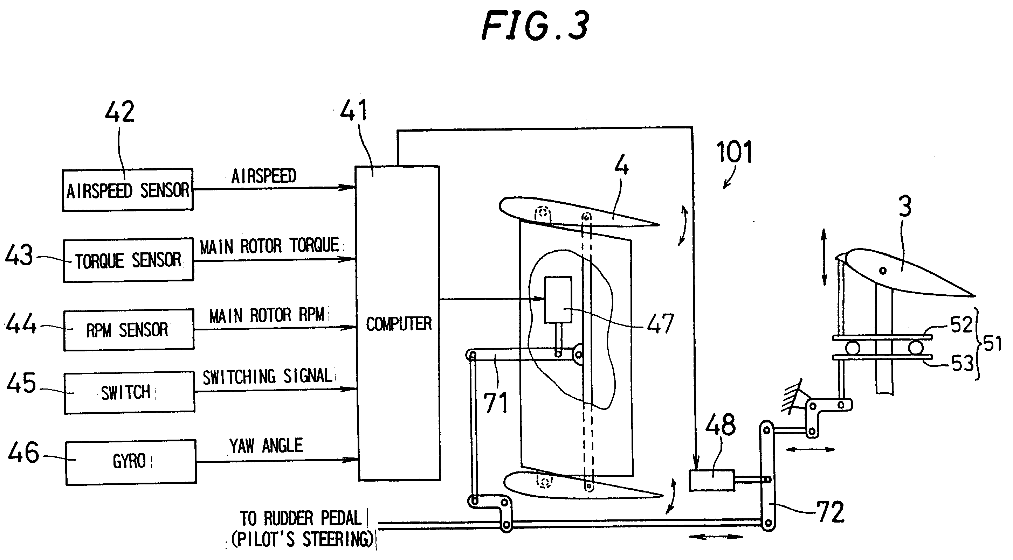

Fig. 3 is a view illustrating a torque compensation apparatus 101 of the helicopter 1. Vertical tails 4 and 5 are linked to each other, whose angle of attack is variable. As to the tail rotor, a non-rotating swash plate 53 moving along a tail rotor shaft displaces a rotating swash plate 52 rotating on the tail rotor shaft to make the pitch angle of the tail rotor 3 variable.

An airspeed measured by an airspeed sensor 42, a torque T1 of the main rotor 2 measured by a torque sensor 43, a rotational speed of the main rotor 2 measured by a rotational speed sensor 44, a switching signal from a switch 45, and a yaw angle measured by a gyro 46 are sent to a computer 41, which drives actuators 47 and 48 based on these signals. Inputs from the actuators 47 and 48 and pilot's steering inputs from the rudder pedal are mixed by levers 71 and 72. Accordingly, the angle of attack of the vertical tails 4 and 5 and the pitch angle of the tail rotor 3 can be controlled by a pilot's steering of the rudder pedal irrespective of the control position of the actuators 47 and 48. When the pilot does not operate the rudder pedal, the actuators 47 and 48 are controlled by input from the computer 41, whereby the angle of attack of the vertical tails 4 and 5 and the pitch angle of the tail rotor 3 can be adjusted to automatically compensate the torque of the main rotor 2.

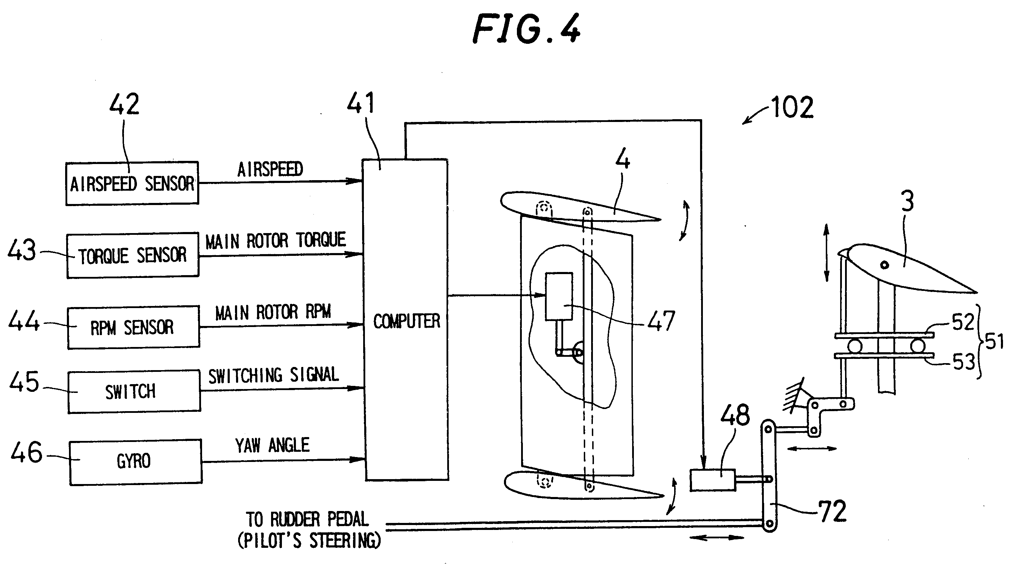

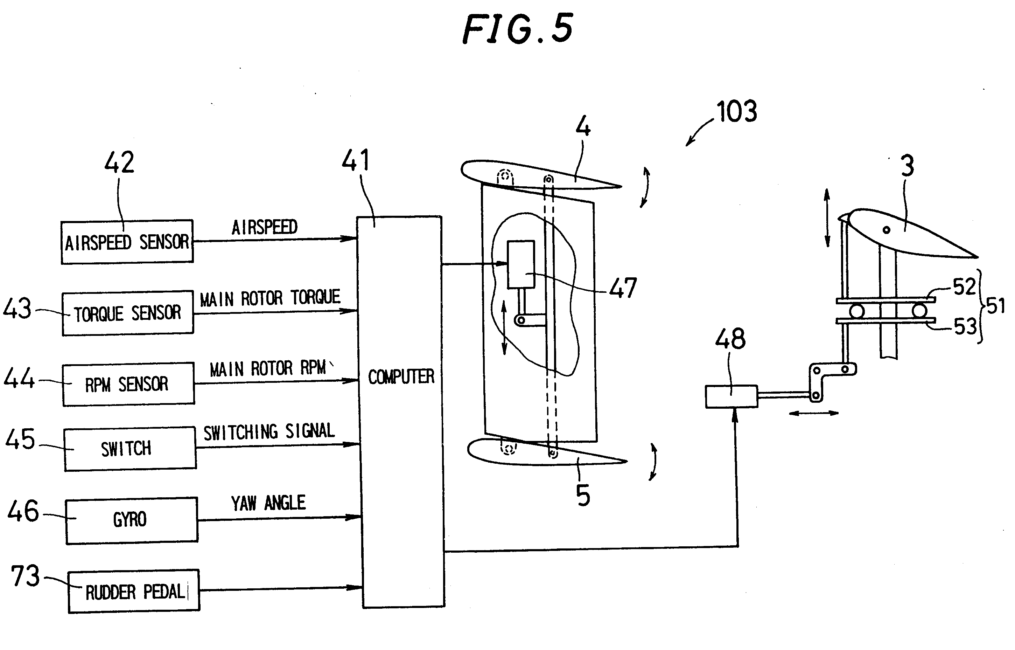

Alternatively, the torque compensation apparatus may be of a constitution as shown below in Fig. 4 and Fig. 5.

Fig. 4 is a view illustrating a torque compensation apparatus 102 for the helicopter 1. In the torque compensation apparatus 102, different from the torque compensation apparatus 101, a rudder pedal is interlocked with the actuator 48 but not interlocked with the actuator 47. Accordingly, the angle of attack of vertical tails 4 and 5 are controlled only by the computer 41, and the pitch angle of the tail rotor 3 is adjusted by both the computer 41 and the rudder pedal. In this way, the angle of attack of the vertical tails 4 and 5 and the pitch angle of the tail rotor 3 can be controlled individually and the steering input by a pilot and the control by the computer 41 are reflected to the pitch angle of the tail rotor 3.

Fig. 5 is a view illustrating a torque compensation apparatus 103 of the helicopter 1. In the torque compensation apparatus 103, different from the torque compensation apparatuses 101 and 102, the rudder pedal 73 is electrically connected with the computer 41. The steering input from the rudder pedal 73 is sent to the computer 41. The actuator 47 controls the angle of attack of vertical tails 4 and 5 based on the signal from the computer 41. The actuator 48 controls the pitch angle of the tail rotor 3 based on the signal from the computer 41. Accordingly, the angle of attack of the vertical tails 4 and 5 and the pitch angle of the tail rotor 3 can be adjusted individually and the pilot's steering input can be also reflected through the computer 41 to each angle.

Additionally, the torque compensation apparatus 101 shown in Fig. 3 enables to continue flying by the pilot steering the rudder pedal even when the computer 41, the airspeed sensor 42, the torque sensor 43, the rotational speed sensor 44, the switch 45 or the gyro 46 in the electric system is failed. Further, the apparatuses 101 may have such a construction as having no equipment of the electric system, where the pilot can adjust both the angle of attack of the vertical tails 4 and 5 and the pitch angle of the tail rotor 3.

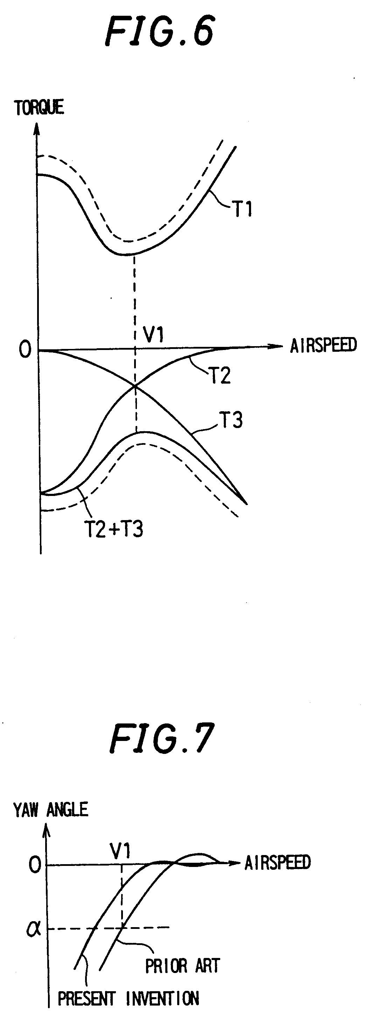

Fig. 6 is a graph illustrating airspeed dependences of torques T1 to T3. In the graph, the abscissa represents the airspeed of the helicopter 1, while the ordinate represents the torques T1 to T3 and (T2+T3). As the airspeed increases from zero, the amount of airflow through the main rotor increases, and the main rotor torque decreases. However, the torque T1 turns to increase at a certain velocity V1, for example, 60 kt. To cancel out the torque T1, it is necessary that the sum of the torque T2 and the torque T3 are identical with the torque T1 in magnitude and opposite to the direction of the torque T1 as: $\text{T2+T3= -T1}$. In order to keep the tail rotor load within some limit, the tail rotor thrust must be reduced as the airspeed increases. Therefore the absolute valve |torque T2| decreases as the airspeed increases. On the other hand, as the airspeed increases, the dynamic pressure of the air on the vertical tails 4 and 5 increases and the absolute value |torque T3| increases.

Accordingly, the effectiveness of the tail rotor 3 is predominant at low airspeed, whereas the effectiveness of the vertical tails 4 and 5 is predominant at high airspeed. Namely, when both monotonously decreasing |torque T2| and monotonously increasing |torque T3| are combined, the sum of the torques T2 and T3 can easily correspond to the increase and decrease of the torque T1, whereby the torque compensation can be attained more reliably.

Further, when the rotational speed of the main rotor 2 is changed by the traction speed changing mechanisms 12 and 22 in Fig. 2, the torque T1 of the main rotor 2 in Fig. 6 changes in the entire speed region. In this case, as shown in Fig. 3 to Fig. 5, the pitch angle of the tail rotor 3 and the angle of attack of the vertical tails 4 and 5 are adjusted automatically, whereby the sum of the torque T2 and the torque T3 is changed and balanced again with the torque T1.

Upon failure of the tail rotor 3 during forward flight of a helicopter 1, when the pilot confirms the failure and then turns the switch 45 to ON, a switching signal is sent to the computer 41. The computer 41 controls the actuator 47 based on the switching signal so as to compensate the amount of torque T2 (made by the tail rotor 3) by increasing the compensation amount of torque T3 (made by the vertical tails 4 and 5). Alternatively, a yaw angle (without pilot's steering inputs) of the fuselage 6 measured by the gyro 46 is sent to the computer 41. The computer 41 compares the yaw angle with a predetermined threshold value and, if the yaw angle is greater than the threshold value, controls the actuator 47 so as to compensate the amount of torque T2 (made by the tail rotor 3) by increasing the compensation amount of torque T3 (made by the vertical tails 4 and 5). This enables for returning flight to a landing base even upon failure of the tail rotor 3 by adjusting the angle of attack of the vertical tails 4 and 5.

Fig. 7 is a graph illustrating airspeed dependences of helicopter yaw angles. The abscissa represents the airspeed, while the ordinate represents the yaw angle, in which are shown a yaw angle of the helicopter 1 according to the present invention and a yaw angle of the existent helicopter of the comparative example upon failure of the tail rotor. The helicopter 1 can fly while keeping the yaw angle at α as far as a lower airspeed than the existent helicopter. While the yaw angle is at a predetermined value α, for example, -15 degrees at a speed V1 such as 60 kt in the existing helicopter, the yaw angle of the helicopter 1 according to the present invention is smaller than that of the existent helicopter. Thus, a speed region allowing for returning flight to the landing base is extended to a lower speed area thereby enabling to more safe returning flight.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A compensation apparatus (101-103) for a main rotor torque in a helicopter (1) having a main rotor (2) and a tail rotor (3), comprising:
a vertical tail (4, 5) supported at a variable angle of attack; and
angle of attack adjusting means (47) for adjusting the angle of attack for compensating an opposite torque (T1) of the main rotor torque together with the tail rotor (3).

2. The compensation apparatus (101-103) for a main rotor torque of claim 1, further comprising:
airspeed measuring means (42) for measuring an airspeed;
main rotor torque measuring means (43) for measuring the main rotor torque;
pitch angle adjusting means (48) for adjusting a pitch angle of the tail rotor (3); and
control means (41) for controlling the angle of attack adjusting means (47) and the pitch angle adjusting means (48) based on the measured airspeed and main rotor torque.

3. The compensation apparatus (101-103) for a main rotor torque of claim 1, wherein the amount of torque compensation by the vertical tail (4, 5) is increased and the amount of torque compensation by the tail rotor (3) is decreased while the airspeed increases.

4. The compensation apparatus (101-103) for a main rotor torque of claim 2, further comprising:
rotational speed measuring means (44) for measuring the rotational speed of the main rotor (2),
wherein the control means (41) adjusts the amount of torque compensation based on the measured rotational speed.

5. The compensation apparatus (101-103) for a main rotor torque of claim 1, wherein in a case where the tail rotor (3) is failed during forward flight, the amount of torque compensation by the vertical tail (4, 5) is increased by so much as the mount of torque compensation by the tail rotor (3).
